# EUROPÄISCHE PATENTSCHRIFT

(11) **EP 3 109 038 B1**
(45) Veröffentlichungstag und Bekanntmachung des Hinweises auf die Patenterteilung: **14.03.2018**
(21) Anmeldenummer: 16161493.8
(22) Anmeldetag: 22.03.2016
(51) Int. Cl.: B29D 29/06, D07B 1/06, B65G 15/34

(54) **FÖRDERGURT MIT EINEM ZUGTRÄGER AUS SEILEN**
CONVEYOR BELT WITH A TENSION CARRIER CONSISTING OF CABLES
BANDE TRANSPORTEUSE À TIRANT EN CÂBLES

(30) Priorität: 26.06.2015 DE 102015211902
(43) Veröffentlichungstag der Anmeldung: 28.12.2016
(73) Patentinhaber: Phoenix Conveyor Belt Systems GmbH, 07422 Bad Blankenburg (DE)
(72) Erfinder: Kolbe, Axel, 07924 Neundorf (DE)
(74) Vertreter: Preusser, Andrea

(56) Entgegenhaltungen:
- EP-A2- 1 184 410
- JP-A- 2000 159 933
- JP-A- 2000 355 415
- JP-A- 2002 234 965
- JP-B2- 3 117 292

## Beschreibung

Die Erfindung betrifft einen Fördergurt mit einer tragseitigen und laufseitigen Deckplatte aus jeweils einem polymeren Werkstoff mit elastischen Eigenschaften sowie einem eingebetteten Zugträger in Form von in Fördergurtlängsrichtung parallel verlaufenden Seilen, welche im Wesentlichen aus Stahl aufgebaut sind.

Fördergurte besitzen wenigstens eine zugkraftübertragende Karkasse aus Textil- und / oder Stahlseileinlagen, die in der Regel von wenigstens einer Haftgummimischung umgeben sind. Die Karkassen sind allseitig von verschleißfesten Gummideckplatten und einem Gummikantenschutz umgeben. Zusätzlich können bei Bedarf noch diverse Durchschlagsschutzeinrichtungen vorhanden sein.
Fördergurte bei denen die Karkasse im Wesentlichen aus Stahlseilen besteht, werden als Stahlseilfördergurte bezeichnet. Stahlseilfördergurte ermöglichen hervorragende Transportleistungen auch bei hoher Beanspruchung. Im Stahlseilfördergurt sind die Stahlseile meist als Lage in einer Ebene zwischen den Deckplatten angeordnet.
Werden diese Deckplatten beschädigt, können Wasser bzw. Feuchtigkeit und / oder anderweitige wässrige Lösungen den Fördergurt eindringen und an den Stahlseilen zu Korrosion führen. Durch die dynamische Bewegung des Stahlseils werden des Weiteren Wasser bzw. Feuchtigkeit und / oder wässrige Lösungen durch den Fördergurt hindurch gezogen und können neben der Korrosion auch noch zu einer Zerstörung der Haftung des Stahlseils an die Deckplatten führen.
Zur Verbesserung der Haftung werden häufig Haftmischungen, auch als Haftgummimischungen bezeichnet, verwendet, die neben der Optimierung der Haftung auch als Korrosionsschutz dienen können. Zur Optimierung des Korrosionsschutzes dieser Haftmischungen wird der Haftmischung in der Regel Bleioxid hinzugefügt. Bleioxid ist allerdings für Mensch, Tier gesundheitsschädlich und umweltgefährlich, so dass hierfür eine geeignete Alternative gefunden werden muss.
Als Alternativen sind aus dem Stand der Technik bereits verschiedene Metallsalze, wie bspw. Ni-Salze oder auch Molybdänsalze bekannt, siehe EP1184410A2, JP2 000 159933, JP2002234965 oder JP2000355415. Auch so genannte Superabsorber werden zum Korrosionsschutz in JP3117292 beschrieben.
Die Aufgabe der Erfindung besteht daher darin, eine Fördergurt bereitzustellen, dessen Zugträger mit einer Haftmischung ausgerüstet sind, die frei von Blei und bleihaltigen Verbindungen ist und gleichzeitig einen ausreichenden Korrosionsschutz für den Zugträger bildet.
Gelöst wird diese Aufgabe dadurch, dass der Zugträger aus einem Seil besteht, welches im Wesentlichen aus Stahl aufgebaut ist, und mit einer Haftmischung ausgerüstet ist, die auf der Basis wenigstens eines Elastomers aufgebaut ist und die wenigstens eine korrosionsvermindernde Substanz enthält, wobei die korrosionsvermindernde Substanz Bismut(III)oxid ist.
"Im Wesentlichen aus Stahl aufgebaut" bedeutet, dass wenigstens 50 Vol.-% des Seils aus Stahl bestehen müssen, es aber auch möglich ist, dass es sich um ein Hybridseil aus Stahl und wenigstens einem weiteren Material handelt. Ein derartiges Hybridseil zum Beispiel aus Stahl und Aramid ist in WO 2012/079820 A1 beschrieben.
Erfindungsgemäß enthält der Fördergurt wenigstens eine Haftgummimischung, welche die Haftung zwischen den Deckplatten und den Seilen gewährleisten soll. Diese Haftgummimischung wird häufig auch als Haftmischung, Kernmischung oder Skimmmischung bezeichnet. Die Haftmischung ist auf der Basis wenigstens eines Elastomers aufgebaut. Bei dem Elastomer kann es sich um Kautschuke, aber auch um thermoplastische Elastomere, wie bspw. Polyurethan, handeln. Es handelt sich bevorzugt allerdings um einen Kautschuk, der ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM). Die genannten Kautschuke können hierbei alleine oder im Verschnitt eingesetzt werden. Besonders gut geeignet sind als Haftmischung Mischungen auf der Basis von SBR und / oder NR und / oder BR. Die Haftmischungen enthalten zumeist noch wenigstens einen Weichmacher und / oder wenigstens ein Lösungsmittel, über die in der Regel die Viskosität und / oder die Haftung bzw. die Klebrigkeit der Haftmischung eingestellt werden kann.

Erfindungswesentlich ist, dass die Haftmischung wenigstens eine korrosionsvermindernde Substanz enthält, wobei die korrosionsvermindernde Substanz Bismut(III)oxid ist.
Die Gesamtmenge an korrosionsvermindernden Substanzen liegt bevorzugt bei 0, 5 bis 10 Gew.-%, besonders bevorzugt bei 1 bis 8 Gew.-%.

In einer bevorzugten Variante wird Bismut(III)oxid als alleinige korrosionsvermindernde Substanz in Mengen von 1 bis 3 Gew.-% verwendet.
Insbesondere Bismut(III)oxid verhindert die Ausbreitung von Wasser bzw. wässrigen Lösungen, insbesondere stark korrodierend wirkenden Salzlösungen, in dem Stahlseilgurt entlang des Stahlseils.
Das Volumen des Bismut(III)oxid vergrößert sich bei Kontakt mit Wasser und / oder wässrigen Lösungen um bis zu 30%. Dadurch erhöht sich auch das Volumen der Haftmischung geringfügig. Diese geringe Erhöhung führt zu einem Abquetschen von Kapillaren, wodurch wiederum der Transport von Wasser bzw. wässrigen Lösungen erschwert wird.

Durch die Zugabe der genannten korrosionsvermindernden Substanz ist es möglich, die Menge an Bleioxid zu reduzieren und bevorzugt sogar ganz auf Bleioxid verzichten zu können. Die Menge an Bleioxid in der Haftmischung beträgt daher bevorzugt 0 Gew.-%, d.h. sie ist frei von Bleioxid.
Die Haftmischung kann auf das Seil mittels alle der fachkundigen Person bekannten Verfahren aufgebracht werden.

In der Literatur wird häufig zwischen Fördergurten und Transportbändern unterschieden. Fördergurte werden in der Regel für Schüttgut (wie bspw. Kohle, Erze, Sand, Zement usw.) eingesetzt, während Transportbänder üblicherweise für Stückgut (Pakete usw.) benutzt werden. Fördergurte sind im Allgemeinen länger, breiter, dicker und stärker als Transportbänder. Im allgemeinen Sprachgebrauch vermischen sich allerdings die beiden Begrifflichkeiten oft. Die vorliegende Erfindung ist somit sowohl für Fördergurte als auch für Transportbänder geeignet, bei denen jeweils Seile zum Einsatz gelangen, die im Wesentlichen aus Stahl aufgebaut sind. Es ist auch möglich, die beschriebene Haftmischung in weiteren technischen Kautschukartikeln, in denen Zugträger oder Einlagen verwendet werden, die im Wesentlichen aus Stahl aufgebaut sind, zu verwenden. Dies können zum Beispiel Antriebsriemen, insbesondere Flachriemen für die Aufzugtechnik, oder auch Fahrzeugluftreifen sein. Erfindungsgemäß ist die tragseitige und laufseitige Deckplatte des Fördergurts aus jeweils einem polymeren Werkstoff mit elastischen Eigenschaften aufgebaut. Hierbei kann es sich um Kautschuke, aber auch um thermoplastische Elastomere, wie bspw. Polyurethan, handeln. Bei dem polymeren Werkstoff handelt es sich bevorzugt um einen Kautschuk, der ausgewählt ist aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM).
Die genannten Kautschuke können hierbei alleine oder im Verschnitt eingesetzt werden.

Von besonderer Bedeutung ist bislang CR, das sich durch eine hohe Flamm-, Witterungs-und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.
Die Deckplatten können auch als Folie oder Gewebe ausgebildet sein, wobei hierbei die genannten Werkstoffe ebenso zum Einsatz kommen. Besonders bevorzugt ist es, wenn die Folie auf der Basis wenigstens eines Fluorpolymers aufgebaut ist. In diesem Fall ist eine zusätzliche optimierte Medienbeständigkeit gewährleistet.

Des weiteren können die beiden Deckplatten neben der Kautschukkomponente wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente) enthalten.

In die tragseitige und/oder laufseitige Deckplatte können zudem noch folgende Bauteile eingebettet sein: Leiterschleifen, Transponder, Barcodes, eine Polymermatrix mit eingemischten detektierbaren Teilchen oder andere detektierbare Elemente.
Der Fördergurt kann noch mit einem Aufbauteil, beispielsweise mit einem Mitnehmerteil, Führungsteil sowie mit Rand- und Seitenwandprofilen versehen sein. Derartige Aufbauteile bestehen aus einem polymeren Werkstoff (Kautschuk, Thermoplastisches Elastomer, Thermoplast) und werden fußseitig mit der tragseitigen Oberfläche des elastischen Fördergurtes verklebt und / oder vulkanisiert.

Bei Stahlseilfördergurten, wie auch bei Fördergurten mit textilen Zugträgern, wird zwecks Schlitzschutz zusätzlich eine in der tragseitigen und/oder laufseitigen Deckplatte eingebettete Querarmierung aus Synthesecorden, beispielsweise aus Polyamid (PA), oder dünnen Stahlcorden verwendet, siehe u.a. WO 2008/034483 A1.

## Patentansprüche

1. Fördergurt mit einer tragseitigen Deckplatte und einer laufseitigen Deckplatte aus jeweils einem polymeren Werkstoff mit elastischen Eigenschaften sowie einem eingebetteten Zugträger in Form von in Fördergurtlängsrichtung parallel verlaufenden Seilen, wobei der Zugträger im Wesentlichen aus Stahl aufgebaut ist und der Zugträger mit einer Haftmischung ausgerüstet ist, wobei die Haftmischung auf der Basis wenigstens eines Elastomers aufgebaut ist und wobei die Haftmischung wenigstens eine korrosionsvermindernde Substanz enthält, **dadurch gekennzeichnet, dass** die korrosionsvermindernde Substanz Bismut(III)oxid ist.

2. Fördergurt nach Anspruch 1, **dadurch gekennzeichnet, dass** die Gesamtmenge an korrosionsvermindernden Substanzen in der Haftmischung 0,1 bis 10 Gew.-% beträgt.

3. Fördergurt nach einem der Ansprüche 1 bis 2, **dadurch gekennzeichnet, dass** die Menge an Bismut(III)oxid in der Haftmischung 1 bis 3 Gew.-% beträgt.

4. Fördergurt nach einem der Ansprüche 1 bis 3, **dadurch gekennzeichnet, dass** der Zugträger zu wenigstens 50 Vol. -% aus Stahl aufgebaut ist.

## Claims

1. Conveyor belt with an outer sheet on the load-bearing side and with an outer sheet on the drive side, the respective sheet being made of a polymeric material with resilient properties, and also with an embedded tension-member system in the form of cords running parallel in the longitudinal direction of the conveyor belt, where the tension-member system is in essence composed of steel and the tension-member system has been equipped with an adhesive mixture, where the composition of the adhesive mixture is based on at least one elastomer and where the adhesive mixture comprises at least one corrosion-inhibiting substance, **characterized in that** the corrosion-inhibiting substance is bismuth(III) oxide.

2. Conveyor belt according to Claim 1, **characterized in that** the total quantity of corrosion-inhibiting substances in the adhesive mixture is from 0.1 to 10% by weight.

3. Conveyor belt according to Claim 1 or 2, **characterized in that** the quantity of bismuth(III) oxide in the adhesive mixture is from 1 to 3% by weight.

4. Conveyor belt according to any of Claims 1 to 3, **characterized in that** the tension-member system is composed of at least 50% by volume of steel.

## Revendications

1. Bande transporteuse comprenant une plaque de recouvrement côté support et une plaque de recouvrement côté roulement, chacune étant constituée d'un matériau polymère ayant des propriétés élastiques, et comprenant également un support de traction noyé sous la forme de câbles s'étendant parallèlement dans la direction longitudinale de la bande transporteuse, le support de traction étant essentiellement constitué d'acier et le support de traction étant pourvu d'un mélange adhésif, le mélange adhésif étant formé à base d'au moins un élastomère et le mélange adhésif contenant au moins une substance réduisant la corrosion,
**caractérisée en ce que**
la substance réduisant la corrosion est de l'oxyde de bismuth(III).

2. Bande transporteuse selon la revendication 1,
**caractérisée en ce que** la quantité totale de substances réduisant la corrosion dans le mélange adhésif vaut 0,1 à 10 % en poids.

3. Bande transporteuse selon l'une quelconque des revendications 1 à 2, **caractérisée en ce que** la quantité d'oxyde de bismuth(III) dans le mélange adhésif vaut 1 à 3 % en poids.

4. Bande transporteuse selon l'une quelconque des revendications 1 à 3, **caractérisée en ce que** le support de traction est constitué pour au moins 50% en volume d'acier.
